Europäisches Patentamt

European Patent Office

Office européen des brevets

(11) Publication number: **0 499 261 A1**

# EUROPEAN PATENT APPLICATION

(21) Application number: **92102443.6**

(22) Date of filing: **13.02.92**

(51) Int. Cl.5: **C05F 3/00**

(30) Priority: **13.02.91 IT 37691**

(43) Date of publication of application:
**19.08.92 Bulletin 92/34**

(84) Designated Contracting States:
**AT BE CH DE DK ES FR GB GR IT LI LU NL SE**

(71) Applicant: **ENICHEM AGRICOLTURA S.p.A.**
**Via Ruggero Settimo 55**
**I-90139 Palermo(IT)**

(72) Inventor: **Baccarani, Celeste**
**9, Via Primieri**
**I-48100 Ravenna(IT)**

(74) Representative: **Barz, Peter, Dr.**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) Continuous process for the preparation of fertilizers from animal waste.

(57) Described is a continuous process for the preparation of fertilizers from animal waste, comprising the following steps:

(a) anaerobic fermentation of waste up to a $BOD_5$ value of 300 - 2000;

(b) treatment with $HNO_3$ up to pH 1 - 2,

(c) treatment with $Ca(OH)_2$ up to pH 6.5 - 7 and an S.A.R. index <6, with the addition of small quantities of $H_2O_2$, therebefore or thereafter.

The present invention relates to a continuous process for the preparation of fertilizers from animal waste.

Methods for the transformation of animal waste into fertilizers are already known. These methods basically consist of treating the waste with mineral acids and, optionally, oxidants as described, for example, in US-A-3,966,450 and 4,078,094 and in EP-A-370565.

These methods, however, show considerable disadvantages which mainly are related to the quality of the product obtained, which generally does not satisfy the regulations concerning the distribution of waste containing pathogenous and/or polluting agents in the environment, and does not show the salt content (S.A.R. index <6) necessary for its use as fertilizer, making it insufficiently stable over extended periods of time and capable of producing badly-smelling and/or phytotoxic substances.

In addition, these known methods are difficult to carry out on an industrial scale by using a continuous process which is both economical and ecologically safe and which allows the complete utilization of animal waste to obtain a fertilizer of constant quality which is ecologically safe and does not have adverse effects on agricultural cultivations.

It has now been found that the drawbacks of the known method can be avoided by using a continuous process which includes the following steps for the treatment of animal waste:

(a) anaerobic biological fermentation;

(b) treatment of the product obtained with $HNO_3$ under suitable conditions of pH, temperature and time;

(c) subsequent treatment with $Ca(OH)_2$ under critical pH conditions and addition, before, during or after said treatment, of small quantities of $H_2O_2$.

The process is continuous and is extremely versatile in that it allows the treatment and recovery of animal waste of any origin and consistency such as mixtures of excrements, urine, feeding residues, trough waste, washing water for animal rearing, in particular of hogs, and litter residues; all of the treatment steps are integrated with each other and necessary for obtaining a fertilizer in an aqueous suspension which is perfectly preservable, substantially without any unpleasant odours, pathogenous agents and mycetes, and which is non-toxic and does not pollute the environment and, in particular, agricultural cultivations.

The product is very valuable not only because of the substantial and balanced presence of the main fertilizing elements (N,P,K) in an easily available form, as well as of secondary elements (Ca, Mg and S) and useful microelements (B, Mn, Zn, Cu, Mo, Co, Fe), but mainly because it contributes to improving the productiveness of agricultural soil. The latter is due to the presence of certain amounts of biodegraded organic substances, including humic acids, fulvic acids, peptones and aminoacids, which contribute to an increase of the availability of the useful elements (which are much more easily absorbed and transported to the vascular system of plants and better utilized, also causing an increase in the humic bacteria flora which must be present in a vital soil) and an increase in the exchange capacity of soils, mainly those which have previously been treated with exclusively inorganic manure.

The present invention, therefore, provides a continuous process for the preparation of fertilizers from animal waste, which comprises the following steps:

(a) subjecting said waste to anaerobic biological fermentation for a period necessary to reduce the content of biodegradable organic substance to $BOD_5$ values of from 300 to 2000;

(b) treating the aqueous suspension resulting from step (a), at temperatures ranging from 20 to 70°C, with $HNO_3$ up to pH 1 - 2 and for periods of 30 - 60 minutes, to obtain a ratio available $P_2O_5$/total $P_2O_5$ in the suspension of between 87 and 97%; and

(c) treating the aqueous suspension resulting from step (b) with calcium hydroxide in quantities such as to obtain a suspension with pH 6.5 - 7 and an S.A.R. index lower than 6, with an addition of 100 - 100,000 ppm of $H_2O_2$, preferably at about 35% by weight, either before, during or after said treatment.

Depending on the temperature used in step (b), it is particularly advantageous to operate in the following way:

- when step (b) is carried out at temperatures lower than 50°C, it is preferable to add the $H_2O_2$ before the treatment of the suspension with calcium hydroxide, preferably in quantities necessary to reduce the fecal streptococci to values lower than 2 MPN/100 ml and the mycetes to values lower than 100 MPN/1 ml;

- when step (b) is carried out at temperatures higher than 50°C, it is preferable to add the $H_2O_2$ after the treatment of the suspension with calcium hydroxide, at room temperature and in quantities such as to obtain a suspension with an rH of 30 - 32.

The duration of the anaerobic fermentation in step (a) obviously depends on the content of organic substances in the starting waste, as well as on the fermentation temperatures, (generally ranging from 20 to 40°C) and on the pH (generally ranging from 6 to 8).

During the fermentation the content of biodegradable organic substances is monitored by means of

BOD$_5$ (Biochemical Oxygen Demand) measurements.

During the anaerobic fermentation biogas is formed; said biogas is mainly composed of methane which, after purification, may be recovered and used for the energy requirements of the present process and/or for other purposes.

The acid treatment in step (b) is generally carried out with aqueous solutions of 50 - 60% by weight nitric acid, until a pH of the aqueous suspension of from 1 to 2 is reached, thus also effecting both the substantial recovery of NH$_3$ present in the suspension and the total recovery of phosphorus in substantially an available form.

In the treatment of step (c) aqueous solutions of 5 - 20% by weight of calcium hydroxide are generally used until a suspension having a pH of 6.5 - 7 and an S.A.R. index lower than 6, preferably lower than 4, is obtained. The S.A.R. index is defined by the equation:

$$S.A.R. = \frac{Na}{\sqrt{\dfrac{Ca + Mg}{2}}}$$

where the concentration of the elements is expressed in milli-equivalents per litre.

Low S.A.R. indices are necessary in order to not change the conductivity, aeration and texture of the agricultural soil.

The H$_2$O$_2$ is generally used in the form of 30 - 40% by weight aqueous solutions and is preferably added before or after the treatment with calcium hydroxide. The amount of H$_2$O$_2$ depends on the organic substance present and preferably is regulated in such a way as to obtain an aqueous suspension which has a redox activity rH of 30-32 immediately after the addition of the H$_2$O$_2$.

This suspension is storage stable for about 3 months with a limited formation of mycetes (mycetes <700 MPN/1 ml) and little development of unpleasant odours and/or phytotoxic substances.

The fertilizing suspension thus obtained can be used as such or after dilution with water in ferti-irrigation.

The ratio of the main fertilizing elements N, P and K can also be adjusted to obtain a more suitable ratio for the intended cultivation.

It is therefore possible, without any drawbacks, to add mineral manure, organo-mineral manure, and potassium salts (to balance the K$_2$O titre), to add NH$_3$ in step (c) (to balance the nitrogen titre) and/or to add ammonium phosphate with a major content of polyphosphates (>50%) (to balance the nitrogen and P$_2$O$_5$ titre).

It is also possible to add humic substances of vegetable origin, thus allowing the formation of phosphohumates (and thereby making the phosphorus more available and metabolizable for plants) as well as allowing the formation of humates and fulvates of metals such as Fe, Mn, Cu and Zn (which thereby are gradually made available for the metabolic requirements of plants).

The fertilizer obtained by the process of the present invention has all the characteristics necessary for being safely preserved and distributed on agricultural soil by using modern techniques of ferti-irrigation and, in particular:

- it can be stored for at least 3 months with a very limited formation of mycetes (<700 MPN/1 ml) and without any release of unpleasant odours and/or phytotoxic substances;
- because of its low content of colibacteria (<2 MPN/100 ml), it can be used on cultivations to be eaten raw, such as salad, tomatoes, and other vegetables, without any danger to health;
- because of its almost neutral pH (6.5 - 7), it can be used without causing any damage to plants during the whole vegetative cycle;
- because of its low S.A.R. index (<6) it does not change the conductivity, aeration and texture of the soil, not even when used permanently;
- it affords a balanced supply of the main nutritive elements (N, P, K) and of secondary elements (Ca, Mg, S) as well as of useful microelements (B, Mn, Zn, Cu, Mo, Co, Fe), in an easily available form for the metabolic needs of plants, and also a balanced supply of biodegraded organic substances, containing compounds and substances with chelating and complexing functionalities or also of a colloidal nature which positively influence the protein metabolism of the plant, especially the synthesis and activity of the enzymes, as well as the absorption of minerals, and it also helps to limit the loss of nitrates normally washed away from the soil by perculating water;
- because of its high water content, it contributes to the irrigation of cultivations in areas or, particularly, in periods of the year where there is scarce rainfall or availability of water, as for example in the case of a drought.

In fact, the process of the present invention, besides resulting in a complete recovery of animal waste and making it available as fertilizer, avoids the disadvantages related to the alternative means of waste-disposal by spreading; said advantages can be summarized as follows:

- it eliminates hygenic problems associated with the diffusion of pathogenous germs contained in waste in enormous quantities;
- by allowing the total recovery of phosphorus contained in the waste, it avoids its accumulation in watercourses and in the sea, said accumulation being the main cause of the eutrophization thereof;
- it prevents the discharge of considerable harmful quantities of $NH_3$ in the atmosphere, allowing its total recovery by means of salification to ammonium nitrate;
- it prevents the discharge in the atmosphere of toxic and badly-smelling substances such as $H_2S$, mercaptans, indole, skatole and the like;
- it avoids lengthy and costly treatments of the waste in biological depurators, which are necessary, by law, to obtain water which is easily disposable in water-courses, in the sea and in the soil.

The following examples are to further illustrate the present invention.

In said examples the $BOD_5$ (Biochemical Oxygen Demand), COD (Chemical Oxygen Demand) and rH (redox acitvity of the solution) values and the number and type of pathogenous germs and mycetes [expressed as MPN (most probable number)] have been determined in accordance with the methods described in APHA. AWWA. JWPCJ. "Standard Methods for the Examination of Water and Waste Water" XVI Ed., (Washington APHA 1985) and in the reports of the Istituto di Ricerca sulle Acque - I.R.S A. (CNR) "Metodi Analitici per le acque" (Methods of water analysis) No. 11, 1980.

## EXAMPLE 1

A 70 l sample of pig waste was transformed into a fertilizer in an aqueous suspension which was stable to storage, without any pathogenous agents or badly-smelling substances and consequently particularly suitable for use in ferti-irrigation.

The pig waste used had the characteristics shown in Table 1.

Said waste was subjected to anaerobic biological fermentation in mesophily (35°C) over a period of 40 days. The characteristics of the product obtained after the fermentation are shown in Table 2.

A 25 litre sample of the product obtained from the fermentation was treated with $HNO_3$ (60% by weight) up to pH 1.3, at 60°C and over a period of 60 minutes.

The phosphorus content of the product obtained after the treatment with $HNO_3$ was as follows:

```
Total phosphorus. . . . . . . . . . . . . . . . . . . (P₂O₅)     1347   mg/l

Organic phosphorus. . . . . . . . . . . . . . . . (P₂O₅)       20   mg/l

Inorganic phosphorus. . . . . . . . . . . . . . (P₂O₅)     1327   mg/l

Available phosphorus. . . . . . . . . . . . . . (P₂O₅)     1247   mg/l

Available P₂O₅/total P₂O₅                             94   %

Phosphorus   sol. H₂O. . . . . . . . . . . . . . (P₂O₅)     1020   mg/l
```

The product treated as above with $HNO_3$ was subsequently neutralized with 10% by weight aqueous $Ca(OH)_2$ up to pH 6.8 and, after cooling down to 30°C, 1000 ppm of $H_2O_2$ in the form of a 35% by weight aqueous solution were added.

A stable product was obtained, which did not contain any decaying or badly-smelling substances and proved to be particularly suitable for ferti-irrigation, after dilution with water in a ratio of 1:10 by weight. The characteristics of the above product are shown in Table 3.

4

TABLE 1

SAMPLE OF PORCINE WASTE OBTAINED FROM THE COMPANY ZOOFORM IN FORLIMPOPOLI (Ex. 1)

Characteristics:

pH..................................................................8.2

$H_2O$.............................................................97.30%

     Ureic acid.................................2.0 mg/l

     Total nitrogen...........(N).............2805   mg/l

     Ammonium nitrogen.........(N)..............2005   "

     Ureic nitrogen...........(N)...............343   "

Nitric nitrogen...........(N).............<10        "

Organic nitrogen..........(N).............447        "

Total phosphorus.........$(P_2O_5)$............1217        "

Organic phosphorus.......$(P_2O_5)$............414        "

Inorganic phosphorus.....$(P_2O_5)$............803        "

Available phosphorus.....$(P_2O_5)$............700        "

Phosphorus   sol. $H_2O$.....$(P_2O_5)$............257        "

Total potassium .........$(K_2O)$............2250        "

Total calcium.............(Ca)............838        "

Total magnesium...........(Mg).............262        "

Total sulphur............(S).............209        "

Total sodium.............(Na).............730        "

S.A.R. Index................................7.9

Conductivity...............................18.0   mS/cm

Total carbon.............(C).............9475   mg/l

Extractable carbon........(C).............5342        "

Carbon from humic subst. HA + FA..(C)......2116        "

COD.......................................29000        "

$BOD_5$.......................................10400        "

Total coli...................50 million MPN/100   ml

Fecal coli...................16 million        "

Fecal streptococci...........10 million        "

Mycetes.........................<1000      MPN/1 ml

Salmonellae......................absent

Microelements:

Iron..................(Fe).............43.6      mg/l

Copper................(Cu).............10.2        "

```
        Manganese.............(Mn)................7.7      "

        Zinc..................(Zn)...............15.9      "

        Cobalt................(Co)...............<0.5      "

        Molybdenum............(Mo)...............<0.5      "

        Boron.................(B)................2.7       "
Toxic metals and non-metals:

        Aluminium.............(Al)................9.9      mg/l

        Arsenic...............(As)...............<1.0      "

        Barium................(Ba)...............5.0       "

        Cadmium...............(Cd)...............<0.5      "

        Chromium(III).........(Cr)...............<0.5      "

        Chromium(VI)..........(Cr)...............<0.5      "

        Mercury...............(Hg)...............<0.5      "

        Nickel................(Ni)...............<0.5      "

        Lead..................(Pb)...............<2.0      "

        Selenium..............(Se)...............<2.0      "

        Tin...................(Sn)...............<2.0      "

        Chlorides.............(Cl-).............1420       "
```

<u>TABLE 2</u>

ANALYSIS OF PORCINE WASTE AFTER ANAEROBIC BIOLOGICAL FERMENTATION AT 35°C FOR A PERIOD OF 40 DAYS (EX.1)

```
pH.............................................8.2

H₂O...........................................98.10   %

        Uric acid.............................<1.0 mg/l

        Total nitrogen.........(N).............2817      "

        Ammonium nitrogen.......(N).............2321      "

        Ureic nitrogen.........(N).............25        "

        Nitric nitrogen........(N).............18        "
```

EP 0 499 261 A1

```
       Organic nitrogen........(N).............453    "

       Total phosphorus......(P₂O₅).............1226    "

       Organic phosphorus....(P₂O₅)..............42    "

       Inorganic phosphorus..(P₂O₅).............1184    "

       Available phosphorus..(P₂O₅)..............995    "

Available P₂O₅/total P₂O₅.....................84    %

       Phosphorus   sol. H₂O..(P₂O₅).............345 mg/l

       Total potassium........(K₂O).............2200    "

       S.A.R. Index..............................6.9    "

       Conductivity..........................20.5 mS/cm

       Total carbon...........(C)............4739 mg/l

       Extractable carbon ......(C).............2767 mg/l

       Carbon from humic substances

                     HA + FA....(C).............1035    "

COD.............................................9100    "

BOD₅............................................1260    "

Total coliform bacteria.MPN/100ml.............150

Lower and upper limits...MPN/100ml.........30-440

Fecal coliform bacteria.MPN/100ml.............< 3

Lower and upper limits...MPN/100ml.........<0.5-9

Fecal streptococci......MPN/100ml..............93

Lower and upper limits...MPN/100ml.........15-380

Mycetes.................MPN/1ml.............7000
```

<u>TABLE 3</u>

CHARACTERISTICS OF FINAL PRODUCT (EX.1)

pH.............................................6.8

% H₂O.........................................94.97

8

```
Ureic acid ............................... <1.0  mg/l

Total nitrogen.........(N)...............8133    "

Ammonium nitrogen......(N)...............2590    "

Ureic nitrogen.........(N)...............<1.0    "

Nitric nitrogen........(N.)..............4964    "

Organic nitrogen.......(N)...............579     "

Total phosphorus......(P₂O₅)............1387     "

Organic phosphorus....(P₂O₅)..............50     "

Inorganic phosphorus..(P₂O₅)............1337     "


Available phosphorus..(P₂O₅)............1257     "

Available P₂O₅/total P₂O₅.................94     %

Phosphorus  sol. H₂O..(P₂O₅)............560 mg/l

Total potassium........(K₂O).............2260    "

Total calcium..........(Ca)............2833      "

Total magnesium........(Mg)..............339     "

Total sulphur..........(S)..............116      "

Total sodium..........(Na).............831       "

S.A.R. Index...............................3.9

Conductivity............................38.0 mS/cm

Total carbon............(C).............4743 mg/l

Extractable carbon .....(C).............2300 mg/l

Carbon from humic substances

              HA + FA....(C)..............938    "
```

Total coliform bacteria.MPN/100ml................0

Upper limit............MPN/100ml..............<2

Fecal coliform bacteria.MPN/100ml................0

Upper limit............MPN/100ml..............<2

```
Fecal streptococci......MPN/100ml................0

Upper limit............MPN/100ml..............<2

Mycetes................MPN/1ml.................<5

Salmonellae............N/50g.................absent

rH........................................31.65
```

EXAMPLE 2

A 25 litre sample of the product obtained after fermentation as described in example 1, having the characteristics shown in Table 2, was treated with 60% by weight of $HNO_3$ up to a pH of 1.3, at a temperature of 35°C and for a period of 60 minutes.

The content of phosphorus and pathogenous agents of the product obtained after the treatment with $HNO_3$ was as follows:

```
Total phosphorus..................(P₂O₅)....1230  mg/l

Organic phosphorus................(P₂O₅)......38    "

Inorganic phosphorus..............(P₂O₅)....1292    "

Available phosphorus..............(P₂O₅)....1085    "

Available P₂O₅/total P₂O₅................... 91   %

Phosphorus  sol. H₂O..............(P₂O₅)....1047  mg/l

Total coliform bacteria.MPN/100ml..............43

Lower and upper limits..MPN/100ml..........7-210

Fecal coliform bacteria.MPN/100ml.............<3

Lower and upper limits..MPN/100ml.........<0.5-9

Fecal streptococci......MPN/100ml.............75

Lower and upper limits..MPN/100ml.........14-236

Mycetes................MPN/1ml.............2500
```

1000 ppm of 35% by weight of $H_2O_2$ were then added, at 35°C, to the acidified product.

The content of pathogenous agents was determined on the product after the above addition, with the following results:

| Total coliform bacteria | MPN/100ml | <2.2 |
|---|---|---|
| Lower and upper limits | MPN/100ml | 0-6 |
| Fecal coliform bacteria | MPN/100ml | <2.2 |
| Lower and upper limits | MPN/100ml | 0-6 |
| Fecal streptococci | MPN/100ml | <2.2 |
| Lower and upper limits | MPN/100ml | 0-6 |
| Mycetes | MPN/1ml | <100 |
| rH | | 31.65 |

The product treated as described above was then neutralized with a 10% by weight aqueous solution of $Ca(OH)_2$, up to a pH of 6.8.

Obtained was a stable end product without any decaying or badly-smelling odours, the characteristics of which are shown in Table 4.

The product proved to be particularly suitable for ferti-irrigation after dilution with water in a ratio of 1:10 by weight.


TABLE 4

CHARACTERISTICS OF FINAL PRODUCT (EX.2)

pH.................................................6.8

$H_2O$.............................................95.1  %

Uric acid............................... <1.0  mg/l

Total nitrogen.........(N)...............8150   "

Ammonium nitrogen......(N)...............2600   "

Ureic nitrogen.........(N)...............<1.0   "

```
Nitric nitrogen........(N.).............4981      "

Organic nitrogen.......(N)...............569     "

    Total phosphorus......(P₂O₅)............1280    "

    Organic phosphorus....(P₂O₅)..............50    "

    Inorganic phosphorus..(P₂O₅)............1230    "

    Available phosphorus..(P₂O₅)............1119    "

    Available P₂O₅/total P₂O₅.................91   %

    Phosphorus  sol. H₂O..(P₂O₅)............510 mg/l

    Total potassium........(K₂O)............2280    "

    Total calcium..........(Ca)............2810    "

    Total magnesium........(Mg).............335    "

    Total sulphur..........(S)..............115    "

    Total sodium...........(Na).............830    "

    S.A.R. Index.............................3.9

    Conductivity.........................38.0 mS/cm

    Total carbon............(C)............4780 mg/l

    Extractable carbon .....(C)............2330 mg/l

    Carbon from humic substances

              HA + FA....(C)..............942    "

Total coliform bacteria.MPN/100ml.............<2.2

Lower and upper limits..MPN/100ml.............0-6

Fecal coliform bacteria.MPN/100ml.............<2.2

Lower and upper limits..MPN/100ml.............0-6

Fecal streptococci......MPN/100ml.............<2.2

Lower and upper limits..MPN/100ml.............0-6

Mycetes.................MPN/1ml...............<100

Salmonellae............N/50g.................absent

rH.......................................31.65
```

EXAMPLE 3 (Comparison)

A 10 litre sample of porcine waste having the characteristics shown in Table 1 of example 1, was treated with 60% by weight of HNO₃ up to a pH of 4.0, at a temperature of 25°C and for a period of 25 hours.

1000 ppm of 35% by weight of $H_2O_2$ were then added to the product.

A product having the following content of pathogenous agents was obtained:

```
Total coliform bacteria.MPN/100ml...............<3

Lower and upper limits..MPN/100ml...........<0.5-6

Fecal coliform bacteria.MPN/100ml..............<3

Lower and upper limits..MPN/100ml...........<0.5-9

Fecal streptococci......MPN/100ml.............<2.2

Lower and upper limits..MPN/100ml.........0.1-12.6

Mycetes................MPN/1ml................5000

Salmonellae............N/50g.................absent

rH.........................................30.1
```

The product obtained was not stable and had a strong and persistent bad smell, indicating the presence of decaying substances and the release of badly-smelling volatile products all of which were phytotoxic.

Moreover, the product, after storage for 3 months, showed a considerable increase in the content of mycetes with values of 20,000 MPN/1 ml, making it unsuitable for use in ferti-irrigation.

In contrast thereto, the product obtained by the process of the present invention described in example 1, after storage for 3 months, showed a content of mycetes of only 700 MPN/1 ml.

**Claims**

1. Continuous process for the preparation of fertilizers from animal waste, comprising the following steps:
   (a) subjecting said waste to anaerobic biological fermentation for a period sufficient to reduce the content of biodegradable organic substances to $BOD_5$ values of from 300 to 2000;
   (b) treating the aqueous suspensions resulting from step (a), at temperatures of from 20 to 70°C, with $HNO_3$ up to a pH of 1 to 2, for 30 to 60 minutes to obtain a ratio available $P_2O_5$/total $P_2O_5$ in the suspension of from 87 to 97%;
   (c) treating the aqueous suspension resulting from step (b) with calcium hydroxide in quantities such as to obtain a suspension having a pH of 6.5 to 7 and a S.A.R. index lower than 6, with the addition of 100 to 100,000 ppm of $H_2O_2$ either before, during or after said treatment.

2. Process according to claim 1, wherein step (b) is carried out at temperatures lower than 50°C.

3. Process according to claim 2, wherein in step (c) the $H_2O_2$ is added before the treatment of the suspension with calcium hydroxide and in quantities sufficient to reduce the fecal streptococci to values lower than 2 MPN/100 ml and the mycetes to values lower than 100 MPN/1 ml.

4. Process according to claim 1, wherein step (b) is carried out at temperatures higher than 50°C.

5. Process according to claim 4, wherein in step (c) the $H_2O_2$ is added after the treatment of the suspension with calcium hydroxide, at room temperature and in quantities such as to obtain a suspension having an rH of 30 - 32.

6. Fertilizers obtainable by the process of any one of claims 1 to 5.

**European Patent Office**

**EUROPEAN SEARCH REPORT**

Application Number

EP    92 10 2443

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-257 641 (CESKOSLOVENSKA AKADEMIE VED.)<br>* claim 1 *<br>* page 5, line 8 - page 6, line 7 *<br>* example 3 *<br>--- | 1,6 | C05F3/00 |
| Y<br>A | US-A-4 743 287 (ROBINSON, E.C.)<br>* claims 1-4,6 *<br>* column 6, line 29 - column 7, line 15 *<br>* column 7, line 42 - line 53 *<br>* examples 4,5 *<br>--- | 1,6<br>2,4 | |
| A | FR-A-2 281 908 (F.C. CORPORATION)<br>* claims 1,4,5 *<br>* page 2, line 9 - page 4, line 15 *<br>--- | 1,6 | |
| A | FR-A-2 200 224 (KRATZER, B.P.)<br>* claims 1,2,8 *<br>* page 6, line 4 - page 8, line 35 *<br>----- | 1,6 | |
| | | | TECHNICAL FIELDS SEARCHED (Int. Cl.5)<br><br>C05F<br>C05G |

The present search report has been drawn up for all claims

| Place of search | Date of completion of the search | Examiner |
|---|---|---|
| THE HAGUE | 23 APRIL 1992 | RODRIGUEZ FONTAO M.B |